# EUROPÄISCHE PATENTANMELDUNG

(11) **EP 2 634 970 A2**
(43) Veröffentlichungstag der Anmeldung: **04.09.2013**
(21) Anmeldenummer: 13075016.9
(22) Anmeldetag: 26.02.2013
(51) Int. Cl.: H04L 12/28, H04L 29/12

(54) **Zugriff auf Ressourcen innerhalb eines lokalen Netzwerks**

(30) Priorität: 29.02.2012 DE 102012101674
(71) Anmelder: Deutsche Telekom AG, 53113 Bonn (DE); Technische Universität Berlin, 10623 Berlin (DE)
(72) Erfinder: Manecke, Alexander, 12161 Berlin (DE); Kraft, Andreas, 14129 Berlin (DE); Sayegh, Andreas, 10437 Berlin (DE); Runge, Fred, 15806 Zossen-Wünsdorf (DE); Merrall, Simon, 10178 Berlin (DE)
(74) Vertreter: Brandt, Detlef

(57) **Zusammenfassung**

Gemäß der vorgestellten Lösung wird für den Zugriff auf Ressourcen innerhalb eines lokalen Netzwerks auf mindestens einem in dem lokalen Netzwerk freigegebenen Netzlaufwerk (4) mit einem Netzwerkdateisystem (5) zumindest die aktuelle Netzwerkadresse mindestens einer mit diesem Netzlaufwerk (4) assoziierten Netzwerkkomponente (1, 2, 3, 8) als direkte Adressangabe oder als Verweis in mindestens einer Adressdatei (6) abgelegt. Für einen Zugriff auf Statusdaten und/oder Funktionen einer Netzwerkkomponente (1, 2, 3, 8) ist die Adressdatei (6) zum Zweck der Adressierung der betreffenden Komponente mittels mindestens einer zweiten in demselben lokalen Netzwerk angeordneten Netzwerkkomponente (7) auf dem Netzlaufwerk (4) ansprechbar.

## Beschreibung

Die Erfindung betrifft eine Lösung zur Frage des Zugriffs auf Ressourcen innerhalb eines lokalen Netzwerks. Sie bezieht sich hierbei insbesondere auf die Möglichkeit, eine erste Netzwerkkomponente beziehungsweise ein netzwerkfähiges Gerät innerhalb eines entsprechenden lokalen Netzwerks aufzufinden und auf dieses mittels einer anderen Netzwerkkomponente desselben Netzwerks zuzugreifen. Ein derartiger Zugriff erfordert in jedem Falle die Kenntnis einer Netzwerkadresse, mittels welcher die Netzwerkkomponente beziehungsweise das Gerät, auf welches über das Netzwerk zugegriffen werden soll, adressiert werden kann. Insoweit besteht ein wesentlicher Aspekt der Erfindung darin, diese Netzwerkadresse einer mittels der Adresse bezeichneten Netzwerkkomponente für eine andere Netzwerkkomponente verfügbar zu machen. Gegenstand der Erfindung sind dabei ein entsprechendes Verfahren und ein zu dessen Durchführung ausgebildetes lokales Netzwerk.

Für die Ansteuerung von Komponenten beziehungsweise Geräten in einem IPbasierten lokalen Netzwerk ist beispielsweise das UPnP-Protokoll (Universal Plug and Play) entwickelt worden, welches sich zum Auffinden der Geräte in dem lokalen Netzwerk des SSDP (Simple Service Discovery Protocol) bedient. Mittels des UPnP-Protokolls ist es möglich, netzwerkfähige Hausgeräte, wie beispielsweise eine Stereoanlage oder einen Fernseher, wie eine Waschmaschine, einen Drucker oder eine Haussteueranlage, welche speziell für die Verwendung des UPnP-Protokolls ausgebildet sind, mittels eines anderen, dieses Protokoll ebenfalls unterstützenden Netzwerkgeräts, wie beispielsweise eines PCs oder eines Laptops, zu steuern. Dazu melden sich UPnP-fähige Geräte nach der Zuweisung einer IP-Adresse innerhalb des lokalen Netzwerks bei einer Steuereinheit - einem so genannten Kontrollpunkt - an. Falls entsprechende Informationen bei der Anmeldung an den Kontrollpunkt noch nicht übertragen wurden, fordert der Kontrollpunkt dann bei den entsprechenden Geräten einen Beschreibungsdatensatz an, welcher Informationen zur Charakterisierung des Gerätes enthält. Dieser Beschreibungsdatensatz kann zudem eine so genannte Präsentation-URL enthalten, welche auf die IP-Adresse einer durch das Gerät generierten Konfigurationswebseite verweist. Über den Aufruf der entsprechenden Konfigurationswebseite unter der zugehörigen IP-Adresse ist es dann möglich, das Gerät über das lokale Netzwerk zu konfigurieren und/oder zu steuern. Allerdings sind bislang nur vergleichsweise wenige Geräte mit UPnP-fähigen Schnittstellen beziehungsweise Interfaces ausgestattet. Zudem handelt es sich bei dem UPnP-Protokoll um einen Quasistandard, der im Hinblick auf zur Steuerung von Netzwerkkomponenten eventuell verwendete Computer beziehungsweise Laptops nicht durch alle Hersteller entsprechender Hardware und Software unterstützt wird. So wird dieses Protokoll beispielsweise im Allgemeinen von nicht Microsoft Windows basierten Computern oder Geräten (Microsoft Windows ist eine eingetragene Marke der Microsoft Corporation in Redmond, U. S. A.), wie von unter Linux arbeitenden PCs oder Geräten der Firma Apple (Apple Inc. U. S. A.), nicht unterstützt. Derartige Computer oder Geräte stellen zu diesem Zweck vielmehr ähnliche, jedoch nicht kompatible Lösungen zur Verfügung. Andererseits sind Heimnetzwerke heutzutage nicht selten insoweit heterogen ausgebildet, als in sie Computer beziehungsweise computerbasierte Geräte mit unterschiedlichen Computerarchitekturen und verschiedenen Betriebssystemen eingebunden sind.

Eine andere Möglichkeit der Steuerung von Geräten in einem lokalen Heimnetzwerk besteht darin, in einem für die Steuerung verwendeten Gerät (PC oder Laptop) für jedes Gerät entsprechende Treiber zu hinterlegen, zu installieren und zu konfigurieren. Auch in diesem Fall können die zu steuernden Geräte gegebenenfalls mit einer Konfigurationswebseite ausgestattet sein, welche unter Verwendung des jeweils passenden Gerätetreibers ansprechbar ist. Jedoch ist eine solche Lösung, insbesondere im Hinblick auf die Anpassung und Pflege (Update) der Treiber vergleichsweise aufwendig. Zudem ist eine entsprechende Lösung nicht universell einsetzbar.

Durch die US 2005/0125540 A1 wird eine Lösung für den Zugriff auf Geräte eines lokalen Netzwerks beschrieben, nach welchem der Zugriff über ein von einem Router zur Verfügung gestelltes Webseitenportal ermöglicht wird. Der Router baut hierbei unter Rückgriff auf seine intern gehaltenen Portweiterleitungstabellen eine Tabelle mit Verweisen zu den Geräten des Netzwerks auf, welche in Form einer Webseite visualisiert wird und den Zugriff auf eine jeweilige Netzwerkkomponente durch einen Klick auf einen zu dieser Komponente in Form eines Links in der Tabelle gehaltenen Verweis ermöglicht. Dabei geht die beschriebene Lösung vorzugsweise davon aus, dass sich dem Netzwerk neu hinzugefügte Geräte durch eine Nachricht nach dem UPnP-Protokoll bekannt machen. Gemäß der Druckschrift kann ein entsprechendes, den Zugriff auf Geräte des Netzwerks ermöglichendes Webseitenportal gegebenenfalls aber auch durch eine eigenständige Netzwerkeinheit ohne Rückgriff auf die Routertabellen zur Verfügung gestellt werden. Durch die letztgenannte Einheit erfolgt zu diesem Zweck unter Nutzung des UPnP-Protokolls ein Monitoring des Netzwerks nach Nachrichten von dem Netzwerk neu hinzugefügten UPnP-fähigen Geräten. Wie bereits ausgeführt, wird jedoch das UPnP-Protokoll insbesondere in heterogenen Netzwerkumgebungen nicht von allen netzwerkfähigen Geräten unterstützt. Zudem ist der Druckschrift im Hinblick auf die letztgenannte Variante kein Hinweis darauf zu entnehmen, wie die Netzwerkadresse der eigenständigen, das Webseitenportal bereitstellenden Netzwerkeinheit anderen, für den Zugriff auf das Portal und die darin verlinkten Geräte verwendeten Netzwerkkomponenten zugänglich gemacht wird.

Aufgabe der Erfindung ist es daher, eine alternative Möglichkeit für den Zugriff auf Ressourcen in einem lokalen Netzwerk zur Verfügung zu stellen. Hierzu sind ein entsprechendes Verfahren anzugeben und ein lokales Netzwerk in einer zur Durchführung des Verfahrens geeigneten Art und Weise auszubilden.

Die Aufgabe wird durch ein Verfahren mit den Merkmalen des Patentanspruchs 1 gelöst. Ein die Aufgabe lösendes lokales Netzwerk ist durch den ersten Sachanspruch charakterisiert. Vorteilhafte Aus- beziehungsweise Weiterbildungen der Erfindung sind durch die Unteransprüche gegeben.

Nach dem zur Lösung der Aufgabe vorgeschlagenen Verfahren wird auf mindestens einem in dem lokalen Netzwerk (im Weiteren auch LAN) freigegebenen Netzlaufwerk mit einem Netzwerkdateisystem mindestens die aktuelle Netzwerkadresse einer mit dem Netzlaufwerk assoziierten ersten Netzwerkkomponente abgelegt. Die jeweilige Netzwerkadresse einer solchen ersten Netzwerkkomponente, auf welche über das LAN zugegriffen werden soll, wird dabei als direkte Adressangabe oder als Verweis in mindestens einer Adressdatei auf dem jeweiligen für das erfindungsgemäße Verfahren verwendeten Netzlaufwerk abgelegt. Zur Adressierung der vorgenannten mindestens einen ersten Netzwerkkomponente für einen Zugriff auf deren Statusdaten und/oder Funktionen ist diese Adressdatei mittels einer zweiten, in demselben lokalen Netzwerk angeordneten Netzwerkkomponente auf dem innerhalb des lokalen Netzwerks freigegebenen Netzlaufwerk ansprechbar. Als Netzlaufwerk für die darauf abzulegende Adressdatei wird dabei ein physisches Laufwerk, ein logisches auf einem physischen Laufwerk oder ein in einem Speicher des lokalen Netzwerks virtualisiertes Laufwerk verwendet.

Dem Betreiber eines lokalen Netzwerks ist hierdurch beispielsweise mittels eines PCs oder Laptops - nämlich der zuvor genannten zweiten Netzwerkkomponente - ein Zugriff auf mindesten eine andere (erste) Netzwerkkomponente des lokalen Netzlaufwerks beziehungsweise auf ein in dieses Netzwerk eingebundenes Gerät über das mindestens eine mit dieser ersten Netzwerkkomponente assoziierte Netzlaufwerk und die darauf in der mindestens einen Adressdatei abgelegte Netzwerkadresse ermöglicht. Dabei ist in Abhängigkeit des für das Netzlaufwerk gewählten Dateisystems ein bezüglich des jeweils für den Zugriff auf die erste Netzwerkkomponente oder ersten Netzwerkkomponenten und gegebenenfalls für deren Steuerung verwendeten computerbasierten Geräts (zweite Netzwerkkomponente) ein weitgehend plattformunabhängiger Zugriff auf Statusdaten und/oder Funktionen von Netzwerkkomponenten ermöglicht. Ein etwa für den Zugriff verwendeter Computer oder ein Smartphone muss dabei unabhängig von seinem Betriebssystem überhaupt nur für den Netzwerkzugriff und für das Handling des auf dem Netzlaufwerk verwendeten Dateisystems ausgebildet sein. Insoweit macht es sich die Erfindung zunutze, dass nahezu alle computerbasierten und netzwerkfähigen Geräte Netzlaufwerke ansprechen und auf darauf gespeicherte Dateien zugreifen können. Dabei ist es von besonderem Vorteil, dass die Möglichkeit eines Zugriffs auf (Netz-) Laufwerke zur Grundfunktionalität von Betriebssystemen gehört, so dass computerbasierten Geräten, welche mit einem Betriebssystem ausgestattet sind, weitgehend unabhängig von der Art des Betriebssystems üblicherweise auch ein Zugriff auf Laufwerke und darauf gespeicherte Dateien ermöglicht ist. Was diese Dateien selbst anbelangt, so sind universelle Dateiformate bekannt, für die eine Lesbarkeit ebenfalls weitgehend betriebssystemunabhängig gewährleistet ist. Unter diesem Gesichtspunkt kommen für die Adressdatei beziehungsweise für die entsprechende Verweise auf Adressen enthaltende Datei der Einsatz universeller Text-DateiFormate oder insbesondere auch die Verwendung des HTML-Formats in Betracht. Weder die erste Netzwerkkomponente, auf welche zugegriffen werden soll, noch die für den Zugriff verwendete zweite Netzwerkkomponente müssen dabei ein plattformabhängiges Protokoll, wie zum Beispiel das UPnP-Protokoll unterstützen.

Soweit vorstehend ausgeführt wurde, dass auf dem freigegebenen Netzlaufwerk eventuell nur ein Verweis zu der Netzwerkadresse einer ersten, gegebenenfalls zu steuernden Netzwerkkomponente in einer entsprechenden Adressdatei abgelegt ist, handelt es sich hierbei vorzugsweise um einen Adressverweis (beispielsweise um einen Hostnamen) der mittels eines in das lokale Netzwerk einbezogenen Servers (beispielsweise eines DNS-Servers) oder eines in dem lokalen Netzwerk verfügbaren Dienstes in die eigentliche aktuelle Netzwerkadresse der betreffenden Netzwerkkomponente auflösbar ist.

Vorzugsweise werden in der Adressdatei für eine erste (gegebenenfalls zu steuernde) Netzwerkkomponente neben ihrer aktuellen Netzwerkadresse oder dem Verweis auf die eigentliche Netzwerkadresse außerdem zusätzliche Angaben zur Art dieser Netzwerkkomponente abgelegt. Bei diesen Angaben kann es sich beispielsweise um einen die betreffende Netzwerkkomponente beschreibenden Namen oder um Angaben zu ihren Eigenschaften und/oder ihren technischen Spezifikationen handeln.

Entsprechend einer Ausprägung der Erfindung greift der Nutzer mittels einer zweiten Netzwerkkomponente über eine Adressdatei auf ein Nutzerinterface zur Bedienung der jeweiligen anderen Netzwerkkomponente oder zur Bedienung mindestens eines über diese Netzwerkkomponente an das lokale Netzwerk angebundenen Geräts zu. Bei dem vorgenannten Nutzerinterface handelt es sich vorzugsweise um eine von der betreffenden Netzwerkkomponente generierte Konfigurationswebseite zur Konfiguration und Steuerung dieser Komponente. Dem Betreiber des lokalen Netzwerks ist es demnach beispielsweise möglich, an einem unter Microsoft Windows arbeitenden PC im Explorer ein Netzlaufwerk sowie die darauf abgelegte Adressdatei anzuklicken, hierdurch eine von einem zu steuernden Gerät generierte Konfigurationswebseite zu öffnen, diese auf seinem PC zur Ansicht zu bringen und durch entsprechende Einträge oder das Betätigen von Schaltflächen auf der Konfigurationswebseite die mit dem ausgewählten Netzlaufwerk assoziierte erste Netzwerkkomponente beziehungsweise das Gerät zu steuern. Entsprechendes ist ihm aber auch mit anderen netzwerkfähigen Computern oder mittels eines mit einem anderen Betriebssystem arbeitenden Computers oder computerbasierten Gerätes - wie eines PCs, eines Laptops, Tablet-PCs, eines Smartphone, einer Spielekonsole oder eines anderen vernetzbaren Gerätes mit einer Verarbeitungseinheit - möglich, wobei sich nur die Art der Darstellung und die Auswahl des mit der ersten, gegebenenfalls zu steuernden Netzwerkkomponente assoziierten Netzlaufwerks eventuell anders gestaltet. Die anzuklickende Adressdatei enthält hierbei für die jeweilige erste Netzwerkkomponente insbesondere einen Eintrag in Form einer IP-Adresse oder einer beziehungsweise eines mittels eines DNS-Servers zu einer IP-Adresse auflösbaren URL (Uniform Ressource Locator).

Das zuvor erläuterte Verfahren kann gemäß einer ersten grundsätzlichen Ausgestaltungsvariante so ausgelegt sein, dass jede den Zugriff auf eine Netzwerkkomponente ermöglichende Adressdatei auf jeweils einem gesonderten Netzlaufwerk abgelegt wird. Dies meint, dass für jedes in das lokale Netzwerk einbezogene, für einen Zugriff und gegebenenfalls für eine Steuerung über das Netzwerk vorgesehene Gerät (erste Netzwerkkomponente) ein gesondertes Netzlaufwerk vorgesehen ist. Das jeweilige Netzlaufwerk kann dabei an oder auf der mit ihm assoziierten Netzwerkkomponente oder aber auch auf einer gegebenenfalls mehrere Netzlaufwerke beherbergenden (eventuell zentralen) Netzwerkkomponente, wie einer Steuerung beziehungsweise einer Haussteuereinheit, ausgebildet sein. Auch eine Ausbildung des/eines Netzlaufwerks auf einer für den Zugriff und/oder die Steuerung erster Netzwerkkomponenten verwendeten zweiten Netzwerkkomponente selbst ist grundsätzlich denkbar. Denkbar ist es darüber hinaus, dass auf einem freigegebenen Netzlaufwerk mehrere Adressdateien mit jeweils aktuellen Netzwerkadressen der innerhalb des Netzwerks steuerbaren Netzwerkkomponenten abgelegt werden. Letzteres stellt eine zweite grundsätzliche Ausgestaltungsvariante des erfindungsgemäßen Verfahrens dar.

Ebenso wie die Frage, wo und in welcher Weise das oder die mit einer Netzwerkkomponente assoziierten Netzlaufwerke innerhalb des Netzwerks realisiert werden (siehe hierzu spätere Ausführungen zur Ausbildung des lokalen Netzwerks) sind auch für die Erzeugung beziehungsweise Aktualisierung der Adressdatei oder -dateien unterschiedliche Möglichkeiten gegeben. Gemäß einer möglichen Ausbildungsform der Erfindung wird die Adressdatei von einer ersten, gegebenenfalls zu steuernden Netzwerkkomponente auf dem freigegebenen, mit dieser Netzwerkkomponente assoziierten Netzlaufwerk nach der Zuweisung einer Netzwerkadresse selbsttätig erzeugt oder durch einen Eintrag ihrer augenblicklichen Netzwerkadresse beziehungsweise eines entsprechenden Verweises selbsttätig aktualisiert. Denkbar ist es aber ebenso, dass das Erzeugen der Adressdatei beziehungsweise deren Aktualisierung durch eine vorzugsweise zentrale, zum Beispiel als eine Haussteuereinheit ausgebildete Netzwerkkomponente erfolgt. Dabei sind zur Realisierung dieser Möglichkeit wiederum unterschiedliche Vorgehensweisen denkbar. So kann eine entsprechende Netzwerkkomponente beziehungsweise eine eventuelle zentrale Steuereinheit, wie beispielsweise insbesondere eine Haussteuereinheit, zyklisch das lokale Netzwerk nach eventuell neu in das Netzwerk einbezogenen (ersten) Netzwerkkomponenten gewissermaßen sondieren beziehungsweise abscannen und beim Auffinden einer neu hinzugekommenen Netzwerkkomponente deren Netzwerkadresse (also vorzugsweise deren IP-Adresse) zusammen mit einer für die Netzwerkkarte dieser Komponente ermittelten MAC-Adresse (ähnliches gilt selbstverständlich für auch andere verwendbare Netzwerkprotokolle und/oder Adressierverfahren) in mindestens einer Adressdatei auf einem oder gegebenenfalls mehreren mit der ersten Netzwerkkomponente assoziierten Netzlaufwerken vermerken. So ist es zum Beispiel denkbar, dass an die in das Netzwerk eingebundenen Komponenten durch eine entsprechende Steuereinheit beziehungsweise Haussteuereinheit in zeitlichen Abständen ein Echo Request Paket, nämlich ein ICMP-Pakettyp 8 (ICMP = Internet Control Message Protocol) - ein sogenannter Ping - gesendet wird, die Netzwerkkomponenten also angepingt werden, und unter Nutzung des ARP (Address Resolution Protocol) die MAC-Adresse einer jeweiligen Netzwerkkomponente ermittelt und in Zuordnung zur ihrer aktuellen Netzadresse in der Adressdatei abgespeichert wird.

Bezüglich des Zugriffs auf die Adressdatei ist das Verfahren gemäß einer möglichen Ausbildung der Erfindung so gestaltet sein, dass das Netzlaufwerk mit der Adressdatei jeweils nur temporär im Netzwerk angemeldet und demnach auch nur temporär durch eine zur Steuerung erster Netzwerkkomponenten verwendete zweite Netzwerkkomponente ansprechbar ist. So wird gewissermaßen ein Zeitfenster geschaffen und hierdurch das Risiko für eine missbräuchliche Konfiguration durch Dritte verkleinert. Eine Möglichkeit besteht dabei darin, dass das Netzlaufwerk nur für einen kurzen Zeitraum (wenige Minuten) nach einem Neustart der betreffenden Steuereinheit (zum Beispiel nach einer Trennung und Neuverbindung zum Stromnetz) angemeldet und nach Überschreiten einer vorgegebenen Zeitdauer von der Steuereinheit wieder abgemeldet wird. Eine weitere Möglichkeit ist es, dass der Nutzer einen Knopf an der Steuereinheit betätigt (ähnlich wie von DECT-Geräten bekannt) und die Steuereinheit hierdurch dazu veranlasst wird, das Netzlaufwerk für einen begrenzten Zeitraum anzumelden. Eine dritte Variante ist es, dass der Nutzer über einen Server im Netz (WAN) den Anmeldevorgang des Netzlaufwerks veranlasst.

Das Verfahren kann noch dadurch weitergebildet sein, dass der Zugriff auf eine erste Netzwerkkomponente oder auf mehrere oder alle der ersten Netzwerkkomponenten mittels einer zweiten Netzwerkkomponente nur autorisierten Nutzern möglich ist, die sich für den Zugriff identifizieren und authentifizieren müssen. Die Realisierung eines solchen autorisierten Zugriffs kann dabei zum Beispiel dadurch erfolgen, dass eine erste (gegebenenfalls zu steuernde) Netzwerkkomponente mit mehreren Netzlaufwerken innerhalb des lokalen Netzwerks assoziiert wird und einzelne Nutzer beziehungsweise für den Zugriff oder zur Steuerung verwendete (zweite) Netzwerkkomponenten grundsätzlich nur Zugang zu einem oder einigen der Netzlaufwerke erhalten und sich zur Nutzung eines jeweiligen Netzlaufwerks identifizieren und authentifizieren müssen. In vergleichbarer Weise kann aber auch hinsichtlich der auf einem oder mehreren Netzlaufwerken gespeicherten Adressdateien verfahren werden, indem deren Nutzung (durch Öffnen der Datei) an das Bestehen entsprechender Zugriffsrechte gebunden wird. Vorzugsweise kommen hinsichtlich des Zugangs zu gegebenenfalls mehreren Netzlaufwerken oder der Festlegung von Zugriffsrechten für Adressdateien gebräuchliche Verfahren der Nutzerverwaltung zum Einsatz, die als solches nicht Gegenstand dieser Erfindung sind. Sofern eine erste Netzwerkkomponente, auf welche zugegriffen werden soll, über ein Nutzerinterface zu ihrer Steuerung verfügt, kann das Verfahren so gestaltet sein, dass das Erfordernis einer entsprechenden Autorisierung gegenüber diesem Nutzerinterface vorgesehen wird. Um dem Nutzer eine entsprechende Autorisierung zu ermöglichen, können zum Beispiel auf der Steuereinheit oder deren Verpackung ein Username und ein Passwort angegeben sein, welche der Nutzer bei der Verbindung mit dem Netzlaufwerk eingeben muss. Entsprechende Credentials können dem Benutzer aber auch anders bekannt gemacht werden, nämlich zum Beispiel durch Zusenden eines Einschreibens oder durch Anzeige an einem Display der Steuereinheit beziehungsweise Haussteuereinheit. Denkbar ist es darüber hinaus, dass sich die Steuereinheit aktiv an einem Server im Netz (WAN) anmeldet, welcher dann die Credentials zum Beispiel per E-Mail an den Nutzer verschickt. Letzteres ist aber nur möglich, wenn sich die Steuereinheit bereits ohne Nutzereingriff mit dem Server im WAN verbinden kann.

Das zur Lösung der Aufgabe und zur Durchführung des zuvor erläuterten Verfahrens geeignete lokale Netzwerk umfasst mindestens eine erste Netzwerkkomponente und mindestens eine für einen Zugriff auf Statusdaten und/oder Funktionen dieser mindestens einen ersten Netzwerkkomponente verwendbare zweite Netzwerkkomponente. Erfindungsgemäß umfasst das Netzwerk darüber hinaus mindestens ein innerhalb des betreffenden Netzwerks zumindest für die zweite Netzwerkkomponente freigegebenes Netzlaufwerk mit einem Netzwerkdateisystem. Das vorgenannte mindestens eine Netzlaufwerk ist dabei, dem vorgeschlagenen Verfahren folgend, mit der mindestens einen ersten Netzwerkkomponente assoziiert. Auf dem betreffenden Netzlaufwerk ist mindestens eine mittels einer zweiten, für den Zugriff und gegebenenfalls zur Steuerung einer ersten Netzwerkkomponente verwendeten Netzwerkkomponente ansprechbare Adressdatei mit der aktuell zur Adressierung der ersten Netzwerkkomponente verwendbaren Netzwerkadresse (als direkte Adressangabe) oder mit einem Verweis auf diese Netzwerkadresse abgelegt.

Ein Netzlaufwerk zur Ablage einer Adressdatei für das beschriebene Verfahren kann als Bestandteil einer Netzwerkkomponente des lokalen Netzwerks, vorzugsweise einer der (ersten) Netzwerkkomponenten, auf welche der Zugriff mittels einer anderen erfolgen soll, oder als ein an einer solchen Netzwerkkomponente betreibbares externes Laufwerk ausgebildet sein. Dies umfasst andererseits selbstverständlich die Möglichkeit, dass in dem lokalen Netzwerk ein gesondertes, ausschließlich für diesen Zweck vorgesehenes Netzlaufwerk angeordnet ist.

Im Hinblick auf die Verwendung des Begriffes Laufwerk soll an dieser Stelle ausdrücklich nochmals darauf hingewiesen werden, dass es sich hierbei um ein physisches Laufwerk (zum Beispiel eine Festplatte oder dergleichen), ein auf einem solchen physischen Laufwerk durch Mapping eingerichtetes logisches Laufwerk oder aber auch um ein in einem Speicher virtualisiertes, das heißt insbesondere keine beweglichen Teile aufweisendes, Laufwerk handeln kann.

Vorzugsweise verfügt mindestens eine der ersten Netzwerkkomponenten, auf welche mittels einer zweiten Netzwerkkomponente unter Verwendung einer Adressdatei zugegriffen werden kann, über ein softwarebasiertes Nutzerinterface, welches gegebenenfalls insbesondere auch die Steuerung der betreffenden Netzwerkkomponente ermöglicht. Durch ein solches Nutzerinterface wird dabei vorzugsweise eine auf der zur Steuerung verwendeten zweiten Netzwerkkomponente in einem Browserfenster sichtbar zu machende Konfigurationswebseite generiert.

Gemäß einer vorgesehenen Ausbildung der Erfindung handelt es sich bei der über ein softwarebasiertes Nutzerinterface verfügenden Netzwerkkomponente um eine Steuereinheit, beispielsweise eine Haussteuereinheit, über deren Nutzerinterface ein Zugriff auf Statusdaten und/oder Funktionen mindestens eines über die Steuereinheit an das lokale Netzwerk angebundenen Gerätes, beispielsweise eines Hausgerätes gegeben ist. Hierdurch ist es ermöglicht, über eine entsprechende Steuereinheit zum Beispiel eine Waschmaschine oder eine elektrische Jalousieeinrichtung zu steuern. Vorzugsweise ist ferner ein IP-Router Bestandteil des lokalen Netzwerks, über welchen Netzwerkkomponenten, wie einem PC oder Fernseher, auch ein Zugriff auf ein Weitverkehrsnetz, wie insbesondere das Internet, ermöglicht sein kann. Die entsprechende Steuereinheit kann dabei ein über eine Netzwerkadresse adressierbares Nutzerinterface zur wahlweisen Ansprache einzelner oder aller über sie an das lokale Netzwerk angebundenen Geräte aufweisen. Darüber hinaus ist es aber auch möglich, dass die Steuereinheit mehrere Nutzerinterfaces mit jeweils einer eigenen Netzwerkadresse aufweist, über die jeweils eines oder einzelne, nicht jedoch alle der über sie an das Netzwerk angebundenen Geräte ansprechbar sind. Die Kopplung zwischen den vorgenannten Geräten und der Steuereinheit muss unabhängig von der Beschaffenheit und Organisation des oder der Nutzerinterfaces nicht zwingend IP-basiert sein. Vielmehr kommt auch die Verwendung anderer Netzwerkstrukturen, wie beispielsweise eines Feldbusses für die Verbindung der Steuereinheit (zum Beispiel Haussteuereinheit) und der Geräte (zum Beispiel Hausgeräte wie Kühlschrank, Waschmaschine oder andere netzwerkfähige Hausgeräte) in Betracht.

Bei einer besonders vorteilhaften Ausbildung können die zuvor genannte Steuereinheit und der IP-Router auch Bestandteile einer integralen Einheit sein. Der Router kann zudem weitere Funktionalitäten wie einen DHCP-Server und/oder einen Server (zum Beispiel DNS-Server) zur Adressauflösung von Adressverweisen (zum Beispiel Hostnamen) zur Verfügung stellen. Dabei werden durch einen gegebenenfalls vorhandenen DHCP-Server in bekannter Weise IP-Adressen an die zum Netzwerk gehörenden Netzwerkkomponenten automatisch vergeben. Hierbei ist auch die Möglichkeit eröffnet, dass eine Netzwerkkomponente bei entsprechender Ausbildung nach der Zuweisung der IP-Adresse an den IP-Router Daten mit Informationen über ihre Art beziehungsweise Beschaffenheit übermittelt. Letztere können im Zusammenhang mit dem Eintrag für die Adressdatei zur Unterstützung eines Nutzers in Abhängigkeit von der Implementierung eines entsprechenden Dateisystems auf dem freigegebenen Netzlaufwerk in einem Dateiverwaltungsprogram der für den Zugriff auf andere Netzwerkkomponenten verwendeten (zweiten) Netzwerkkomponente zur Ansicht gebracht werden. Eine vorteilhafte Möglichkeit zur Umsetzung des erfindungsgemäßen Verfahrens ist in diesem Zusammenhang gegeben, wenn ein entsprechend der Erfindung vorgesehenes Netzlaufwerk an oder in dem IP-Router ausgebildet ist und dieser die jeweils vergebenen IP-Adressen und die gegebenenfalls von einzelnen Netzwerkkomponenten erhaltenen zusätzlichen Informationen in mehreren Adressdateien oder in einer Adressdatei mit mehreren Adresseinträgen auf diesem Laufwerk ablegt. Handelt es sich bei dem IP-Router um den Bestandteil einer integrierten Einheit aus Router und Haussteuereinheit, so ist es zur Steuerung anderer Komponenten beziehungsweise Geräte verwendeten Netzwerkkomponenten ermöglicht, unmittelbar auf den IP-Router beziehungsweise das von ihm bereitgestellte Netzlaufwerk mit einer darauf abgelegten Adressdatei zuzugreifen und sich hierüber einen direkten Zugriff auf zu steuernde Netzwerkkomponenten zu verschaffen.

Durch Letztere wird dabei vorzugsweise eine ihre Steuerung unterstützende Konfigurationswebseite zur Verfügung gestellt. Sofern der IP-Router einen Server zur Auflösung von Adressverweisen in Netzwerkadressen, beispielsweise einen DNS-Server umfasst, ist es möglich, dass auf dem oder den Netzlaufwerken Adressdateien abgelegt werden, welche lediglich einen Verweis auf die Netzwerkadressen zu steuernder Netzwerkkomponenten enthalten, bei dem es sich beispielsweise um einen DNS-Eintrag oder einen Hostnamen handelt. Sobald eine einen solchen Verweis enthaltende Adressdatei mittels einer zur Steuerung anderer Netzwerkkomponenten verwendete Netzwerkkomponente angesprochen wird, erfolgt hierbei mit Hilfe des vorgenannten Servers (beispielsweise DNS-Server) die Auflösung des in der Adressdatei enthaltenen Adressverweises in eine physikalische Netzwerkadresse des anzusprechenden und/oder zu steuernden Gerätes beziehungsweise der entsprechenden Netzwerkkomponente.

Nachfolgend sollen Ausführungsbeispiele der Erfindung im Vergleich zum Stand der Technik anhand von Zeichnungen erläutert werden. In den zugehörigen Zeichnungen zeigen:
- Fig. 1:: eine erste mögliche Ausbildungsform eines lokalen Netzwerks zur Durchführung des erfindungsgemäßen Verfahrens,
- Fig. 2:: eine weitere Ausbildungsform eines solchen lokalen Netzwerks,
- Fig. 3:: die Situation nach dem Stand der Technik.

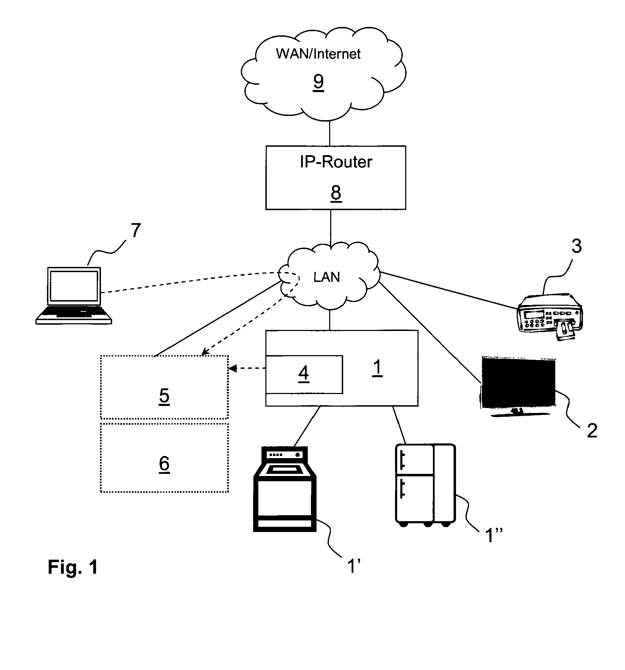

Die Fig. 1 zeigt in einer schematischen Darstellung eine mögliche Ausbildungsform eines lokalen Netzwerks, welches zur Durchführung des erfindungsgemäßen Verfahrens geeignet ist. Wie aus der Zeichnung zu entnehmen ist, umfasst das entsprechende lokale Netzwerk beispielsweise einen IP-Router, erste Netzwerkkomponenten 1, 2, 3, nämlich eine Haussteuereinheit 1 und netzwerkfähige Geräte der Unterhaltungselektronik, nämlich einen Fernseher 2 und eine Stereoanlage 3. Über die Haussteuereinheit 1 sind gemäß dem Beispiel eine entsprechend ausgebildete Waschmaschine 1' und ein Kühlschrank 1" steuerbar. Letztere müssen dabei mit der Haussteuereinheit nicht unbedingt IP-basiert gekoppelt sein, sondern können mit dieser auch über andere Netzwerksysteme, beispielsweise über einen Feldbus, wie zum Beispiel den KNX-Bus verbunden sein. Zur Steuerung der vorgenannten Netzwerkkomponenten 1, 2, 3, das heißt für den Zugriff auf die Haussteuereinheit 1, den Fernseher 2 oder die Stereoanlage 3, soll gemäß dem Beispiel ein Laptop 7, verwendet werden. Bei Letzterem handelt es sich um die in der Beschreibung und den Patentansprüchen genannte zweite Netzwerkkomponente 7, mittels welcher mehrere, als erste Netzwerkkomponenten 1, 2, 3 bezeichnete Einheiten, nämlich vorliegend die Haussteuereinheit 1, der Fernseher 2 und die Stereoanlage 3, steuerbar sind. Hierzu müssen der zweiten Netzwerkkomponente 7 (bei dieser könnte es sich gegebenenfalls selbstverständlich auch, wie schon ausgeführt, um ein Smartphone, eine Spielekonsole oder ein anderes netzwerkfähiges Gerät mit einer Verarbeitungseinheit handeln) die Netzwerkadressen der ersten, zu steuernden Netzwerkkomponenten 1, 2, 3 bekanntgegeben werden. Dies geschieht nach der Erfindung mittels eines zumindest für die zweite Netzwerkkomponente 7 innerhalb des lokalen Netzwerks freigegebenen Netzlaufwerks 4 mit einem Netzwerkdateisystem 5 und einer auf dem Netzlaufwerk 4 abgelegten Adressdatei 6. In dem gezeigten Beispiel ist dieses Netzlaufwerk 4 als ein virtuelles Laufwerk in einem Speicher der Haussteuereinheit 1 ausgebildet. Auf dem Netzlaufwerk 4 wird vorzugsweise für einzelne Netzwerkkomponenten 1, 2, 3 jeweils eine Adressdatei 6 abgelegt. Entsprechend dem dargestellten Beispiel würden hierbei demnach auf dem Netzlaufwerk 4 Adressdateien 6 für die Haussteuereinheit 1 selbst, für den Fernseher 2 und für die Stereoanlage 3 abgelegt werden. Der Zugriff auf die Waschmaschine 1' und den Kühlschrank 1" ist dabei über ein Nutzerinterface der Haussteuereinheit 1 gegeben, durch welche für diesen Zweck eine Konfigurationswebseite bereitgestellt wird. Auf das in dem Speicher der Haussteuereinheit 1 virtualisierte Netzlaufwerk 4 kann mittels der zweiten Netzwerkkomponente 7, also mittels des Laptops, über ein Dateiverwaltungsprogramm des auf dem Laptop verwendeten Betriebssystems (beispielsweise unter Microsoft Windows über den Explorer) aufgrund der Freigabe für das lokale Netzwerk (LAN) wie auf ein lokales Laufwerk zugegriffen werden. Gegebenenfalls muss ein Nutzer des Laptops 7 hierfür über entsprechende Zugriffrechte verfügen und sich zum Nachweis, dass er autorisiert ist, identifizieren und authentifizieren. Der Nutzer des Laptops 7 kann dabei in dem Dateiverwaltungsprogramm das Netzlaufwerk 4 und auf diesem beispielsweise die mit einem "sprechenden Namen" versehene Adressdatei 6 für die Haussteuereinheit 1 anklicken. Sofern er dies tut, wird in einem auf der zweiten Netzwerkkomponente 7 (Laptop) gestarteten Browser eine von der Haussteuereinheit 1 zur Verfügung gestellte Konfigurationswebseite zur Anzeige gebracht. Mittels dieser Konfigurationswebseite ist es dem Nutzer durch entsprechende Einträge oder das Anklicken von verlinkten Buttons möglich, die Waschmaschine 1' oder den Kühlschrank 1" über die Haussteuereinheit 1 zu konfigurieren beziehungsweise zu steuern. Auf dem durch die Haussteuereinheit 1 zur Verfügung gestellten Netzlaufwerk 4 können ferner Adressdateien 6 für den Fernseher 2 oder die Stereoanlage 3, bei denen es sich ebenfalls um erste Netzwerkkomponenten im Sinne der Patentansprüche handelt, abgelegt werden. Es ist jedoch auch möglich, dass durch die letztgenannten Geräte jeweils selbst ein vorzugsweise virtualisiertes Netzlaufwerk 4 zum Ablegen einer Adressdatei 6 für das jeweilige Gerät zur Verfügung gestellt wird. Die Einträge in den Adressdateien 6 beziehungsweise deren Aktualisierung können entweder (insbesondere bei entsprechender "Intelligenz" der zu steuernden Netzwerkkomponenten) durch die zu steuernden Netzwerkkomponenten 1, 2, 3 beziehungsweise Geräte selbsttätig erfolgen oder auch durch den IP-Router 8 oder die Haussteuereinheit 1 veranlasst werden. Im erstgenannten Fall würde auf den entsprechend ausgebildeten (beispielsweise auf dem netzwerkfähigen Fernseher 2 oder der Stereoanlage 3) nach der Zuweisung einer IP-Adresse durch den IP-Router 8 eine Softwareanwendung angestoßen werden, durch deren Ausführung der Eintrag der IP-Adresse und vorzugsweise eines Hinweises auf die Art des unter dieser IP-Adresse erreichbaren Gerätes auf dem jeweiligen Netzlaufwerk 4 in der dafür vorgesehenen Adressdatei 6 erfolgen. Denkbar ist es aber auch, dass beispielsweise die Haussteuereinheit 1 den innerhalb des lokalen Netzwerks 4 definierten Adressraum zyklisch nach neu vergebenen Netzwerkadressen abtastet und durch Ansprache einer gegebenenfalls neu vergebenen IP-Adresse bei dem hierüber adressierbaren - und in diesem Falle entsprechend ausgebildeten - Gerät (zum Beispiel Netzwerkkomponenten 2, 3) eine Information über dessen Art einholt und diese Angaben, nämlich die Netzwerkadresse des Gerätes und die gegebenenfalls von ihm erhaltenen Information, auf dem im Speicher der Haussteuereinheit 1 virtualisierten Netzlaufwerk 4 in einer Adressdatei 6 ablegt. Über den IP-Router 8 wird den im lokalen Netzwerk befindlichen Netzwerkkomponenten 1, 2, 3, 7 vorzugsweise zudem ein Zugriff auf das Internet 9 als WAN (Weitverkehrsnetzwerk) ermöglicht.

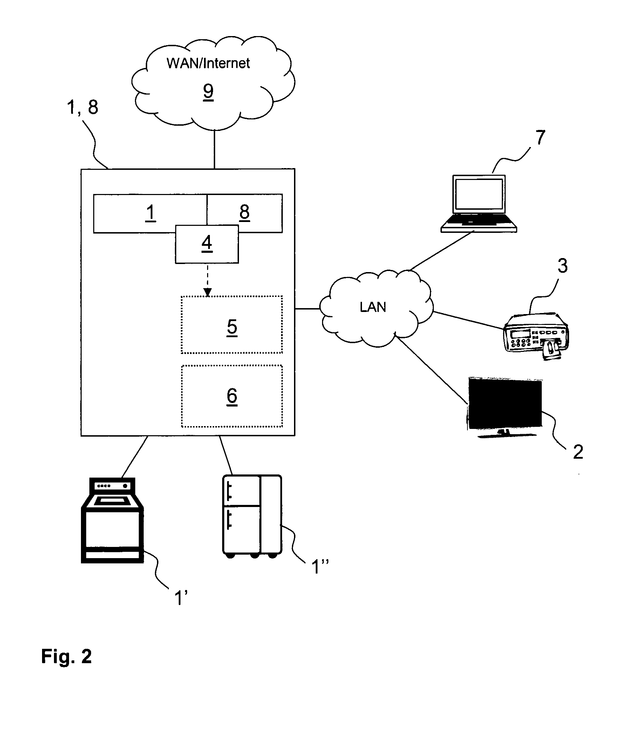

Die Fig. 2 zeigt eine mit der Ausbildungsform gemäß der Fig. 1 vergleichbare Möglichkeit der Gestaltung eines lokalen, für die Durchführung des erfindungsgemäßen Verfahrens geeigneten Netzwerks. Der Unterschied zu der in der Fig. 1 gezeigten Ausbildungsform besteht hierbei lediglich darin, dass der IP-Router 8 und die Haussteuereinheit 1 eine integrale Einheit 1, 8 ausbilden. Hierbei ist ein zur Durchführung des Verfahrens erforderliches freigegebenes Netzlaufwerk 4 zur Aufnahme von Adressdateien 6 in einem Speicher dieser integralen Einheit 1, 8 ausgebildet.

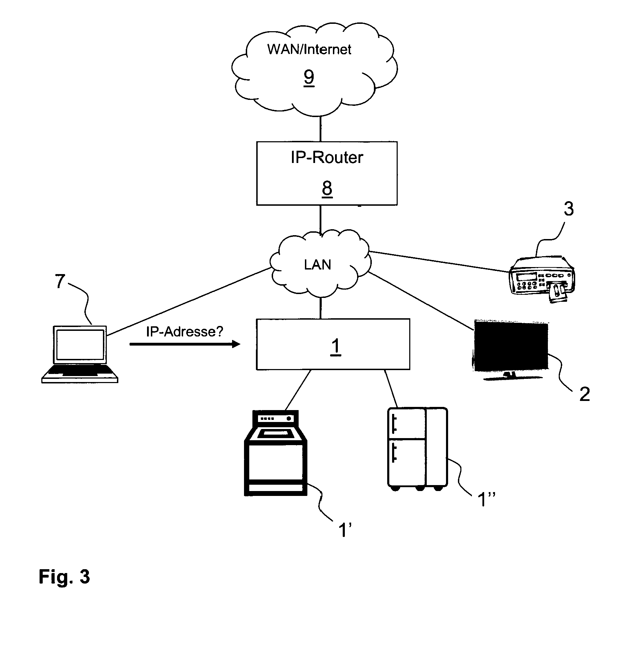

Die Fig. 3 zeigt die Verhältnisse für ein lokales Netzwerk mit darin angeordneten steuerbaren Netzwerkkomponenten nach dem Stand der Technik. Bei der entsprechenden Konfiguration ist der Zugriff auf die Haussteuereinheit 1 und/oder den Fernseher 2 beziehungsweise die Stereoanlage 3 jeweils direkt über deren IP-Adresse gegeben, welche dazu der steuernden Netzwerkkomponente 7, also dem in der Zeichnung dargestellten Laptop, zur Verfügung gestellt werden muss. Dies kann beispielsweise unter Verwendung des UPnP-Protokolls geschehen, bei dessen Verwendung der Laptop 7 als Kontrollpunkt fungiert. Hierbei müssen sowohl der Laptop 7 als auch die mittels ihm zu steuernde Haussteuereinheit 1, der Fernseher 2 und die Stereoanlage 3 UPnP-fähig sein, also das UPnP-Protokoll unterstützen. Dies heißt aber auch, dass das Auffinden und eine Steuerung der Haussteuereinheit 1, des Fernsehers 2 oder der Stereoanlage mittels einer nicht UPnP-fähigen Netzwerkkomponente, nämlich beispielsweise einem nicht unter Microsoft Windows arbeitenden Laptop, gemäß dem Stand der Technik nicht ohne weiteres möglich ist.

### Liste der Bezugszeichen

| | |
|---|---|
| 1 | Netzwerkkomponente, zum Beispiel Haussteuereinheit |
| 1' | netzwerkfähiges Hausgerät, zum Beispiel Waschmaschine |
| 1" | netzwerkfähiges Hausgerät, zum Beispiel Kühlschrank |
| 2 | Netzwerkkomponente, zum Beispiel netzwerkfähiger Fernseher |
| 3 | Netzwerkkomponente, zum Beispiel netzwerkfähige Stereoanlage |
| 4 | Netzlaufwerk |
| 5 | Netzwerkdateisystem auf Netzlaufwerk |
| 6 | Adressdatei auf Netzlaufwerk |
| 7 | Netzwerkkomponente, zum Beispiel Laptop |
| 8 | IP-Router |
| 9 | WAN, zum Beispiel Internet |

## Patentansprüche

1. Verfahren für den Zugriff auf Ressourcen innerhalb eines lokalen Netzwerks, **dadurch gekennzeichnet, dass** auf mindestens einem in dem lokalen Netzwerk freigegebenen Netzlaufwerk (4) mit einem Netzwerkdateisystem (5) zumindest die aktuelle Netzwerkadresse mindestens einer mit diesem Netzlaufwerk (4) assoziierten ersten Netzwerkkomponente (1, 2, 3, 8) als direkte Adressangabe oder als Verweis in mindestens einer Adressdatei (6) abgelegt wird, welche zur Adressierung dieser mindestens einen ersten Netzwerkkomponente (1, 2, 3, 8) für einen Zugriff auf ihre Statusdaten und/oder Funktionen mittels mindestens einer zweiten in demselben lokalen Netzwerk angeordneten Netzwerkkomponente (7) auf dem Netzlaufwerk (4) ansprechbar ist.

2. Verfahren nach Anspruch 1, wobei für die mindestens eine erste Netzwerkkomponente (1, 2, 3, 8) in der mindestens einen Adressdatei (6) ein Verweis abgelegt wird, der mittels eines in das lokale Netzwerk einbezogenen Servers oder eines in dem lokalen Netzwerk verfügbaren Dienstes in die eigentliche, das heißt in die physikalische aktuelle Netzwerkadresse dieser mindestens einen ersten Netzwerkkomponente (1, 2, 3, 8) auflösbar ist.

3. Verfahren nach Anspruch 1 oder 2, **dadurch gekennzeichnet, dass** in der mindestens einen Adressdatei (6) für die mindestens eine erste Netzwerkkomponente (1, 2, 3, 8) neben ihrer aktuellen Netzwerkadresse oder dem Verweis auf ihre Netzwerkadresse zusätzliche Angaben zur Art dieser mindestens einen ersten Netzwerkkomponente (1, 2, 3, 8) abgelegt werden.

4. Verfahren nach einem der Ansprüche 1 bis 3, wobei mittels einer zweiten Netzwerkkomponente (7) über die auf dem mindestens einen freigegebenen Netzlaufwerk (4) abgelegte mindestens eine Adressdatei (6) auf ein Nutzerinterface zur Bedienung mindestens einer ersten Netzwerkkomponente (1, 2, 3, 8) oder mindestens eines über diese erste Netzwerkkomponente (1, 2, 3, 8) an das lokale Netzwerk angebundenen Gerätes (1', 1") zugegriffen wird.

5. Verfahren nach einem der Ansprüche 1 bis 4, **dadurch gekennzeichnet, dass** jede den Zugriff auf eine erste Netzwerkkomponente (1, 2, 3, 8) ermöglichende Adressdatei (6) auf mindestens einem gesonderten Netzlaufwerk (4) abgelegt wird.

6. Verfahren nach einem der Ansprüche 1 bis 4, **dadurch gekennzeichnet, dass** in einer Adressdatei (6) Netzwerkadressen mehrerer erster Netzwerkkomponenten (1, 2, 3, 8) abgelegt werden, wobei der Zugriff auf die Netzwerkadresse der jeweiligen ersten Netzwerkkomponente (1, 2, 3, 8) und damit deren Adressierung nach dem Öffnen dieser Adressdatei (6) mittels einer zweiten Netzwerkkomponente (7) ermöglicht ist.

7. Verfahren nach einem der Ansprüche 1 bis 6, **dadurch gekennzeichnet, dass** die mindestens eine Adressdatei (6) von mindestens einer ersten Netzwerkkomponente (1, 2, 3, 8) auf mindestens einem freigegebenen mit dieser Netzwerkkomponente (1, 2, 3, 8) assoziierten Netzlaufwerk (4) nach der Zuweisung einer Netzwerkadresse selbsttätig erzeugt oder durch einen Eintrag ihrer augenblicklichen Netzwerkadresse selbsttätig aktualisiert wird.

8. Verfahren nach einem der Ansprüche 1 bis 6, **dadurch gekennzeichnet, dass** das Erzeugen der mindestens einen Adressdatei (6) oder deren Aktualisierung durch eine als eine Steuereinheit (1) ausgebildete erste Netzwerkkomponente erfolgt, welche dazu zyklisch das lokale Netzwerk nach eventuell neu in das Netzwerk einbezogenen Netzwerkkomponenten sondiert.

9. Verfahren nach einem der Ansprüche 1 bis 8, **dadurch gekennzeichnet, dass** der Zugriff auf die ersten Netzwerkkomponenten (1, 2, 3, 8) oder einzelne der ersten Netzwerkkomponenten (1, 2, 3, 8) mittels einer zweiten Netzwerkkomponente (7) nur auf der Grundlage autorisierter Zugriffsrechte auf das mindestens eine Netzlaufwerk (4) oder auf die mindestens eine Adressdatei (6) ermöglicht wird.

10. Verfahren nach Anspruch 4, **dadurch gekennzeichnet, dass** der Zugriff auf eine mit einem Nutzerinterface ausgestattete erste Netzwerkkomponente (1, 2, 3, 8) eine Autorisierung gegenüber diesem Nutzerinterface erfordert.

11. Lokales Netzwerk mit mindestens einer ersten Netzwerkkomponente (1, 2, 3, 8) und mindestens einer für einen Zugriff auf Statusdaten und/oder Funktionen der mindestens einen ersten Netzwerkkomponente (1, 2, 3, 8) verwendbaren zweiten Netzwerkkomponente (7), **dadurch gekennzeichnet, dass** das lokale Netzwerk mindestens ein innerhalb des Netzwerks zumindest für eine zweite Netzwerkkomponente (7) freigegebenes Netzlaufwerk (4) mit einem Netzwerkdateisystem (5) umfasst, das mit mindestens einer ersten Netzwerkkomponente (1, 2, 3, 8) assoziiert ist und auf welchem mindestens eine mittels dieser zweiten Netzwerkkomponente (7) ansprechbare Adressdatei (6) mit der aktuell zur Adressierung dieser mindestens einen ersten Netzwerkkomponente (1, 2, 3, 8) verwendbaren Netzwerkadresse oder mit einem Verweis auf diese Netzwerkadresse abgelegt ist.

12. Lokales Netzwerk nach Anspruch 11, **dadurch gekennzeichnet, dass** ein Netzlaufwerk (4) zur Speicherung mindestens einer Adressdatei als Bestandteil einer ersten Netzwerkkomponente (1, 2, 3, 8) ausgebildet oder an dieser als externes Netzlaufwerk (4) betreibbar ist.

13. Lokales Netzwerk nach Anspruch 11 oder 12, **dadurch gekennzeichnet, dass** das mindestens eine, der Ablage mindestens einer Adressdatei (6) dienende Netzlaufwerk (4) als ein physisches Laufwerk, als ein logisches Laufwerk auf einem physischen Laufwerk oder als ein in einem Speicher virtualisiertes Laufwerk ausgebildet ist.

14. Lokales Netzwerk nach einem der Ansprüche 11 bis 13, **dadurch gekennzeichnet, dass** mindestens eine erste Netzwerkkomponente (1, 2, 3, 8) über ein softwarebasiertes Nutzerinterface zur Steuerung der betreffenden ersten Netzwerkkomponente (1, 2, 3, 8) verfügt.

15. Lokales Netzwerk nach einem der Ansprüche 11 bis 14, wobei eine erste Netzwerkkomponente als eine Steuereinheit (1) mit mindestens einem softwarebasierten Nutzerinterface ausgebildet ist, über das ein Zugriff auf Statusdaten und/oder Funktionen mindestens eines über diese Steuereinheit (1) an das lokale Netzwerk angebundenen Gerätes (1', 1") gegeben ist.

16. Lokales Netzwerk nach Anspruch 15, **dadurch gekennzeichnet, dass** die Geräte (1', 1") über einen Feldbus mit der als Steuereinheit (1) ausgebildeten ersten Netzwerkkomponente verbunden sind.

17. Lokales Netzwerk nach Anspruch 15 oder 16, das die Steuereinheit (1) ein über eine Netzwerkadresse adressierbares Nutzerinterface zur wahlweisen Ansprache einzelner oder aller über sie an das lokale Netzwerk angebundenen Geräte (1', 1") aufweist oder sie mehrere Nutzerinterfaces mit jeweils einer eigenen Netzwerkadresse aufweist, über die jeweils eines oder einzelne, nicht jedoch alle der über die als Steuereinheit (1) ausgebildete erste Netzwerkkomponente an das Netzwerk angebundenen Geräte (1', 1") ansprechbar sind.

18. Lokales Netzwerk nach Anspruch 11 oder 14, **dadurch gekennzeichnet, dass** eine erste Netzwerkkomponente ein IP-Router (8) ist.

19. Lokales Netzwerk nach einem der Ansprüche 15 bis 18, **dadurch gekennzeichnet, dass** eine erste Netzwerkkomponente (1, 8) als eine aus einer Steuereinheit (1) und einem IP-Router (8) bestehende integrierte Einheit ausgebildet ist.
